# EUROPEAN PATENT APPLICATION

(11) **EP 4 686 640 A1**
(43) Date of publication of application: **04.02.2026**
(21) Application number: 25193118.4
(22) Date of filing: 31.07.2025
(51) Int. Cl.: B62D 5/04, B62D 7/14, B62D 7/15

(54) **CLUTCH-LIMITED REAR WHEEL STEERING DEVICE AND VEHICLE**

(30) Priority: 31.07.2024 CN 202411048788
(71) Applicant: Huawei Digital Power Technologies Co., Ltd., Shenzhen, Guangdong 518043 (CN)
(72) Inventor: YUAN, Ming, Shenzhen, 518043 (CN); WU, Xinggang, Shenzhen, 518043 (CN); LI, Ying, Shenzhen, 518043 (CN); LI, Cheng, Shenzhen, 518043 (CN); LIN, Mengxuan, Shenzhen, 518043 (CN)
(74) Representative: Isarpatent

(57) **Abstract**

This application provides a clutch-limited rear wheel steering device and a vehicle. The rear wheel steering device is configured to control steering of one or more rear wheels of the vehicle. The rear wheel steering device includes a clutch (40), an input shaft (211), and a tie rod (30). The input shaft is configured to drive the tie rod to move in an axial direction of the tie rod. Steering of the one or more rear wheels changes with axial displacement of the tie rod. The clutch is configured to be in transmission connection to a steering motor (10) and the input shaft (211). Before the steering motor rotates, the clutch is configured to limit rotation of the input shaft. In a rotation process of the steering motor, the clutch is configured to drive the input shaft to rotate with the steering motor. In this application, the clutch is used in the rear wheel steering device to limit steering of the rear wheel, to reduce frequency of intervention of the steering motor in the rear wheel steering device, thereby reducing power consumption.

(Figure 3)

## Description

### TECHNICAL FIELD

This application relates to the field of vehicle technologies, and in particular, to a clutch-limited rear wheel steering device and a vehicle.

### BACKGROUND

A rear wheel steering device is configured to control rear wheel steering of a vehicle, to reduce a mass center side-slip angle of the vehicle in a steering process, reduce a steady-state overshoot of a yaw rate of the vehicle, and achieve stable steering. Before and after the steering process of the vehicle, rear wheel steering needs to be limited by using the rear wheel steering device, to ensure that the vehicle travels normally.

### SUMMARY

This application provides a clutch-limited rear wheel steering device and a vehicle. The clutch is used in the rear wheel steering device to limit steering of a rear wheel, to reduce frequency of intervention of a steering motor in the rear wheel steering device, thereby reducing power consumption.

According to a first aspect, this application provides a rear wheel steering device. The rear wheel steering device is configured to control steering of one or more rear wheels of a vehicle. The rear wheel steering device includes a clutch, an input shaft, and a tie rod. The input shaft is configured to drive the tie rod to move in an axial direction of the tie rod. Steering of the one or more rear wheels changes with axial displacement of the tie rod. The clutch is configured to be in transmission connection to a steering motor and the input shaft. Before the steering motor rotates, the clutch is configured to limit rotation of the input shaft. In a rotation process of the steering motor, the clutch is configured to drive the input shaft to rotate with the steering motor.

The rear wheel steering device provided in this application output a driving force through rotation of the steering motor, and the clutch and the input shaft are configured to transfer the driving force to the tie rod to drive the tie rod to move in the axial direction, to drive the one or more rear wheels to steer. The rear wheel steering device provided in this application further limits rotation of the input shaft by using the clutch before the steering motor rotates, thereby achieving effect that the clutch limits axial displacement of the tie rod.

In this way, when the vehicle is traveling on an uneven road surface and unexpected steering of the one or more rear wheels is caused, the rear wheel steering device in this application may limit an axial displacement amount of the tie rod by using the clutch, to limit an angle at which the one or more rear wheels make unexpected steering, and ensure that the vehicle travels stably.

In this application, the rear wheel steering device limits, by using the clutch, unexpected steering made by the one or more rear wheels due to ground impact, thereby reducing intervention of the steering motor to limit frequency of unexpected steering made by the one or more rear wheels. The steering motor is prevented from operating in a stalling state for a long time, to limit unexpected steering of the one or more rear wheels. In this application, power consumption of the rear wheel steering device is lower, and a service life of the steering motor is longer.

In an implementation, the clutch includes a movable member. The clutch is configured to lock or release the input shaft through moving of the movable member close to or away from the input shaft in a radial direction of the input shaft. The input shaft includes a radial protrusion. The radial protrusion overlaps the movable member in an axial direction of the input shaft. Before the steering motor rotates, the movable member is configured to move away from the input shaft to release the input shaft, and the movable member is further configured to abut against the radial protrusion in a circumferential direction of the input shaft to limit rotation of the input shaft.

In this implementation, the clutch locks or unlocks the input shaft through moving of the movable member in the radial direction of the input shaft. When the clutch locks the input shaft, in the rotation process of the steering motor, the clutch may drive the input shaft to rotate. When the clutch releases the input shaft, before the steering motor rotates, the movable member may abut against the radial protrusion of the input shaft in the circumferential direction to limit rotation of the input shaft.

In an implementation, in the radial direction of the input shaft, the movable member includes two end faces that face away from each other. One of the end faces is configured to face the input shaft and abut against an elastic member, and the other end face is configured to face an inner wall of a housing of the clutch. Before the steering motor rotates, the movable member is configured to receive, by using the end face, driving of the elastic member to move away from the input shaft. A distance between the end face and an axis of the input shaft is less than a radius of the radial protrusion, and the movable member is configured to abut against the inner wall of the housing of the clutch by using the other end face to limit rotation of the movable member in the circumferential direction of the input shaft.

In this implementation, the rear wheel steering device in this application includes the elastic member. The elastic member is configured to: abut against the end face of the movable member in a direction parallel to the radial direction of the input shaft, and drive the other end face of the movable member to abut against the inner wall of the housing of the clutch. In a process in which the input shaft rotates with axial displacement of the tie rod, the end face of the movable member abuts against the radial protrusion of the input shaft, to form friction to limit rotation of the input shaft.

In an implementation, the other end face is circular-arc-shaped. When the movable member releases the input shaft, a circle center of the other end face coincides with the axis of the input shaft.

In this implementation, the other end face that is of the movable member and that faces the inner wall of the housing of the clutch is circular-arc-shaped, and a radius of rotation of the movable member in the housing of the clutch is a circular-arc-shaped radius of the other end face, so that the other end face easily cooperates with the inner wall of the housing of the clutch, to form friction.

In an implementation, the other end face includes a radial protruding portion. The radial protruding portion is configured to be embedded into the inner wall of the housing of the clutch to limit rotation of the movable member in the circumferential direction of the input shaft.

In this implementation, the other end face of the movable member is embedded into the inner wall of the housing of the clutch through the radial protruding portion, so that resistance to rotation of the movable member in the circumferential direction of the input shaft relative to the inner wall of the housing of the clutch is increased, to more reliably limit rotation of the input shaft before the steering motor rotates.

In an implementation, in the radial direction of the input shaft, a length of the radial protruding portion is less than a difference between a distance, present before the steering motor rotates, from the movable member to the axis of the input shaft and half of a thickness of the radial protrusion in the circumferential direction of the input shaft.

In this implementation, distances, present before the steering motor rotates and in the rotation process of the steering motor, of displacement of the movable member in the radial direction of the input shaft are the difference between the distance, present before the steering motor rotates, from the movable member to the axis of the input shaft and half of the thickness of the radial protrusion in the circumferential direction of the input shaft. The length of the radial protruding portion in the radial direction of the input shaft is set to be less than the difference, so that it can be ensured that the radial protruding portion is reliably detached from the inner wall of the housing of the clutch in the rotation process of the steering motor.

In an implementation, in a cross section perpendicular to the axial direction of the input shaft, a cross section shape of the radial protruding portion is a circular-arc shape, so that the radial protruding portion is easily detached from the inner wall of the housing of the clutch.

In an implementation, in a cross section perpendicular to the axial direction of the input shaft, a cross section shape of the radial protruding portion may be a trapezoid, so that a self-locking angle of the radial protruding portion relative to the inner wall of the housing of the clutch is easily controlled through adjustment of an angle of an oblique edge of the trapezoid, thereby ensuring that the radial protruding portion is reliably embedded into the inner wall of the housing of the clutch.

In an implementation, a plurality of radial protruding portions are spaced apart in the circumferential direction of the input shaft, and each radial protruding portion is configured to be embedded into the inner wall of the housing of the clutch.

In an implementation, the end face is a plane, and a plane direction of the end face is perpendicular to the radial direction of the input shaft.

In an implementation, the end face includes a limiting column, and an extension direction of the limiting column is parallel to the radial direction of the input shaft. In another radial direction of the input shaft, a distance between the limiting column and the axis of the input shaft is greater than the radius of the radial protrusion, and the another radial direction of the input shaft is perpendicular to the radial direction of the input shaft. The limiting column is configured to extend into an inner hole of the elastic member to drive the elastic member to rotate with the movable member in the rotation process of the steering motor.

In this implementation, the movable member fixes a relative position of the elastic member by using the limiting column, to ensure that the elastic member pushes the movable member in the radial direction of the input shaft. In the another radial direction of the input shaft, the limiting column is further configured to be away from the axis of the input shaft to avoid the radial protrusion.

In an implementation, the clutch includes a driving member. The driving member is configured to be in transmission connection to the steering motor and the movable member. In the rotation process of the steering motor, the driving member is configured to: first drive the movable member to approach the input shaft in the radial direction of the input shaft, and then abut against the radial protrusion by using the movable member in the circumferential direction of the input shaft to drive the input shaft to rotate.

In this implementation, before the steering motor rotates, the movable member is away from the input shaft in the radial direction of the input shaft. In the rotation process of the steering motor, the driving member first drives the movable member to approach the input shaft in the radial direction of the input shaft, so that the end face of the movable member abuts against a side wall of the radial protrusion in the circumferential direction of the input shaft. Then, the driving member drives the movable member to rotate along the axis of the input shaft and drives the input shaft to rotate synchronously.

In an implementation, the driving member includes two sections in the axial direction of the input shaft. One of the sections is configured to be in transmission connection to the steering motor, and the other section is configured to be embedded into the movable member. An axis of the section coincides with the axis of the input shaft, and an axis of the other section is configured to be spaced apart from the axis of the section in the radial direction of the input shaft. In the rotation process of the steering motor, the section is configured to receive driving of the steering motor to drive the other section to rotate around the axis of the input shaft, and the other section is configured to: first drive the movable member to approach the input shaft, and then drive, by using the movable member, the input shaft to rotate.

In this implementation, the driving member receives a driving force of the steering motor by using the section, and drives the other section to rotate around the axis of the input shaft. Because the other section is spaced apart from the axis of the input shaft in the radial direction of the input shaft, and rotation of the other section generates a component in the radial direction of the input shaft, effect of first driving the movable member to move in the radial direction of the input shaft and then driving the movable member and the input shaft to rotate synchronously is achieved.

In an implementation, the movable member includes an axial groove. In the axial direction of the input shaft, the other section of the driving member is configured to be embedded into a groove opening of the axial groove. In the another radial direction of the input shaft, a width of the other section is less than a width of the axial groove. In the rotation process of the steering motor, the other section is configured to abut against a groove wall of the axial groove in the radial direction of the input shaft and simultaneously slide in the another radial direction of the input shaft relative to the groove wall of the axial groove, to drive the movable member to approach the input shaft.

In this implementation, when rotating around the axis of the input shaft, the other section abuts against the groove wall of the axial groove in the radial direction and slides in the another radial direction relative to the groove wall, to drive the movable member to approach the input shaft in the radial direction of the input shaft. The axial groove is configured to provide space for the other section to slide relative to the movable member.

In an implementation, the axial groove is configured to penetrate the movable member in the axial direction of the input shaft.

In an implementation, the other section of the driving member is configured to pass through the axial groove in the axial direction of the input shaft, so that a contact area between the other section and the groove wall of the axial groove can be increased.

In an implementation, the driving member includes a radial connection section. The radial connection section is configured to connect the section and the other section of the driving member in the radial direction of the input shaft.

In an implementation, the clutch includes another movable member. The movable member, the input shaft, and the another movable member are sequentially arranged in the radial direction of the input shaft. The clutch is configured to lock or release the input shaft through moving of the movable member and the another movable member close to or away from each other in the radial direction of the input shaft. Before the steering motor rotates, a distance between the another movable member and the axis of the input shaft is less than the radius of the radial protrusion.

In this implementation, the movable member and the another movable member approach or are away from the input shaft from two sides in the radial direction of the input shaft, to lock or release the input shaft. The two movable members are separately configured to limit rotation of a radial protrusion, and may reduce a rotation angle that is of the input shaft and that is limited by the clutch, that is, reduce an angle at which the one or more rear wheels make unexpected steering.

In an implementation, in the radial direction of the input shaft, the another movable member includes two end faces that face away from each other. One of the end faces of the another movable member is configured to face the input shaft and abut against an elastic member, and the other end face of the another movable member is configured to face the inner wall of the housing of the clutch.

In an implementation, the other end face of the another movable member is circular-arc-shaped. When the movable member releases the input shaft, a circle center of the other end face of the another movable member coincides with the axis of the input shaft.

In an implementation, the other end face of the another movable member includes another radial protruding portion. The another radial protruding portion is configured to be embedded into the inner wall of the housing of the clutch to limit rotation of the another movable member in the circumferential direction of the input shaft.

In an implementation, in the cross section perpendicular to the axial direction of the input shaft, a cross section shape of the another radial protruding portion is a circular-arc shape or trapezoid.

In an implementation, a plurality of other radial protruding portions are spaced apart in the circumferential direction of the input shaft.

In an implementation, the end face of the another movable member is a plane, and a plane direction of the end face is perpendicular to the radial direction of the input shaft.

In an implementation, the end face of the another movable member includes another limiting column. An extension direction of the another limiting column is parallel to the radial direction of the input shaft. In the another radial direction of the input shaft, a distance between the another limiting column and the axis of the input shaft is greater than the radius of the radial protrusion. The another limiting column is configured to extend into an inner hole of the elastic member to drive the elastic member to rotate with the movable member and the another movable member in the rotation process of the steering motor.

In an implementation, in the direction parallel to the radial direction of the input shaft, an axis of the limiting column coincides with an axis of the another limiting column.

In an implementation, the driving member includes two other sections. The two other sections are spaced apart respectively on two sides of the section in the radial direction of the input shaft. One of the other sections is configured to drive the movable member, and the other of the other sections is configured to drive the another movable member.

In an implementation, the another movable member includes another axial groove. In the axial direction of the input shaft, the other of the other sections of the driving member is configured to be embedded into a groove opening of the another axial groove.

In an implementation, another axial groove is configured to penetrate the another movable member in the axial direction of the input shaft.

In an implementation, the other of the other sections of the driving member is configured to pass through the another axial groove in the axial direction of the input shaft.

In an implementation, the radial connection section is configured to extend away from each other in the radial direction of the input shaft and be connected to the two other sections.

In an implementation, the input shaft includes another radial protrusion. In the radial direction of the input shaft, the another radial protrusion and the radial protrusion extend away from each other in a same straight line direction. Before the steering motor rotates, in the radial direction of the input shaft, a sum of radiuses of the radial protrusion and the another radial protrusion is greater than a distance between the movable member and the another movable member.

In this implementation, in the rotation process of the steering motor, the movable member may abut against the side wall of the radial protrusion or a side wall of the another radial protrusion in the circumferential direction of the input shaft to drive the input shaft to rotate. Before the steering motor rotates, the movable member may limit, in the circumferential direction of the input shaft, rotation of the radial protrusion or the another radial protrusion, thereby reducing a rotation angle that is of the input shaft and that is limited by the clutch, that is, reducing an angle at which the one or more rear wheels make unexpected steering.

In an implementation, the clutch includes two elastic members. The two elastic members are arranged between the movable member and the another movable member in the radial direction of the input shaft, and the two elastic members are arranged on two sides of the input shaft in the another radial direction of the input shaft. Each elastic member is configured to abut against the movable member and the another movable member in the radial direction of the input shaft. Before the steering motor rotates, the movable member and the another movable member are configured to receive driving of the two elastic members to respectively abut against two sides of the inner wall of the housing of the clutch.

In this implementation, the two elastic members are spaced apart in the another radial direction of the input shaft, so that stress on the movable member is more uniform and the movable member reliably abuts against the inner wall of the housing of the clutch in the radial direction of the input shaft.

In an implementation, the inner wall of the housing of the clutch includes a limiting ring. An axis of the limiting ring coincides with the axis of the input shaft. In the radial direction of the input shaft, the limiting ring is configured to surround the movable member. In the axial direction of the input shaft, two side walls that are of the movable member and that face away from each other are located between two side walls that are of the limiting ring and that face away from each other. Before the steering motor rotates, an inner circumferential surface of the limiting ring is configured to abut against the movable member in the radial direction of the input shaft to limit rotation of the input shaft.

In this implementation, the inner wall of the housing of the clutch abuts against the movable member by using the limiting ring. The inner circumferential surface of the limiting ring is configured to be attached to the other end face of the movable member and may increase friction between the movable member and the inner wall of the housing of the clutch.

In an implementation, the axis of the input shaft is parallel to an axis of the tie rod, the input shaft is spaced apart from the tie rod in the radial direction of the input shaft, and an end portion that is of the input shaft and that is away from the steering motor in the axial direction of the input shaft is configured to be in transmission connection to a middle section of the tie rod through a transmission member. In the rotation process of the steering motor, the input shaft is configured to drive, by using the transmission member, the tie rod to move in the axial direction of the tie rod. Before the steering motor rotates, the clutch is configured to limit fluttering of the tie rod in the axial direction of the tie rod by limiting rotation of the transmission member driven by the input shaft.

In this implementation, the axis of the input shaft is parallel to the axis of the tie rod, so that a size that is of the rear wheel steering device provided in this application and that is in the radial direction of the input shaft can be reduced, and a volume of the transmission member can be compressed, thereby facilitating arrangement and assembly of the rear wheel steering device.

In an implementation, the transmission member includes a transmission wheel and a screw sleeve. The transmission wheel is configured to be fastened to the end portion that is of the input shaft and that is away from the steering motor in the axial direction, and an inner circumferential surface of the screw sleeve is configured to be engaged with an outer circumferential surface of the middle section of the tie rod. In the radial direction of the input shaft, the transmission wheel is configured to be in transmission connection to an outer circumferential surface of the screw sleeve, and a diameter of the transmission wheel is less than a diameter of the screw sleeve.

In this implementation, the diameter of the transmission wheel is less than the diameter of the screw sleeve, and deceleration effect of the transmission member may be formed in a direction from the input shaft to the screw sleeve. In the rotation process of the steering motor, the transmission member is configured to reduce a rotation speed of the screw sleeve and amplify a driving force output by the steering motor. When the one or more rear wheels make unexpected steering, the transmission member is configured to reduce a reverse driving force applied by the tie rod to the input shaft, so that the clutch easily limits rotation of the input shaft.

In an implementation, the transmission member includes a transmission belt. An inner surface of the transmission belt is configured to be engaged with an outer circumferential surface of the transmission wheel and the outer circumferential surface of the screw sleeve.

In an implementation, the transmission member includes a tightening wheel. The tightening wheel is configured to squeeze the transmission belt, to increase tension of attaching between the transmission belt and the transmission wheel and between the transmission belt and the screw sleeve.

In an implementation, a middle section that is of the tie rod and that is in the axial direction includes a threaded section. The inner circumferential surface of the screw sleeve is configured to be engaged with the threaded section, and the screw sleeve is configured to: be driven by the transmission wheel and rotate around the axis of the tie rod and simultaneously drive the tie rod to move in the axial direction.

In an implementation, a plurality of balls are included between the inner circumferential surface of the screw sleeve and the threaded section. The plurality of balls are used to reduce friction between the screw sleeve and the tie rod, and improve transmission efficiency of the rear wheel steering device provided in this application.

In this implementation, because the rear wheel steering device in this application limits axial displacement of the tie rod by using the clutch, there is no need for the transmission member to limit axial displacement of the tie rod by using internal friction to reduce frequency of intervention of the steering motor. Therefore, transmission efficiency of the transmission member can be improved, to reduce power consumption in the rotation process of the steering motor.

According to a second aspect, this application provides a vehicle. The vehicle includes one or more rear wheels and the rear wheel steering device provided in the first aspect. The rear wheel steering device is configured to drive steering of the one or more rear wheels to change. The vehicle in this application has low power consumption on a basis of having a rear wheel steering function, and a service life of the rear wheel steering device is long.

### BRIEF DESCRIPTION OF DRAWINGS

To describe technical solutions in this application more clearly, the following briefly describes accompanying drawings used in describing implementations. Clearly, the accompanying drawings in the following descriptions are merely some implementations of this application, and a person of ordinary skill in the art may still derive other drawings from these accompanying drawings without creative efforts.
FIG. 1 is a diagram of an appearance structure of a vehicle according to an embodiment of this application;
FIG. 2 is a diagram of structures of a rear wheel steering device and a rear wheel according to an embodiment of this application;
FIG. 3 is a diagram of a structure of a rear wheel steering device according to an embodiment of this application;
FIG. 4 is a diagram of a cross-sectional structure of a rear wheel steering device according to an embodiment of this application;
FIG. 5 is a diagram of a cross-sectional structure of a transmission mechanism in an area A in FIG. 4;
FIG. 6 is a diagram of a structure of a transmission member in a rear wheel steering device according to an embodiment of this application;
FIG. 7 is a diagram of a cross-sectional structure of a transmission member in a rear wheel steering device according to an embodiment of this application;
FIG. 8 is a diagram of a partial structure of a rear wheel steering device according to an embodiment of this application;
FIG. 9 is a diagram of a structure for cooperation between a movable member and an input shaft according to an embodiment of this application;
FIG. 10 is a diagram of exploded structures of a movable member and an input shaft according to an embodiment of this application;
FIG. 11 is a diagram of a structure of a movable member according to an embodiment of this application;
FIG. 12 is a diagram of structures of a movable member and a housing according to an embodiment of this application;
FIG. 13 is a diagram of structures of a movable member and a housing according to another embodiment of this application;
FIG. 14 is a diagram of a structure of a driving member according to an embodiment of this application;
FIG. 15 is a diagram of a structure for cooperation between a movable member and a driving member according to an embodiment of this application;
FIG. 16 is a diagram of a structure for cooperation between a movable member and an input shaft according to another embodiment; and
FIG. 17 is a diagram of a structure of an input shaft according to an embodiment of this application.

### DESCRIPTION OF EMBODIMENTS

The following describes technical solutions in embodiments of this application with reference to accompanying drawings in embodiments of this application. It is clear that the described embodiments are merely some but not all of embodiments of this application. All other embodiments obtained by a person of ordinary skill in the art based on embodiments of this application without creative efforts shall fall within the protection scope of this application.

This application provides a rear wheel steering device, configured to control steering of one or more rear wheels of a vehicle. The rear wheel steering device includes a clutch, an input shaft, and a tie rod. The input shaft is configured to drive the tie rod to move in an axial direction of the tie rod. Steering of the one or more rear wheels changes with axial displacement of the tie rod. The clutch is configured to be in transmission connection to a steering motor and the input shaft. Before the steering motor rotates, the clutch is configured to limit rotation of the input shaft. In a rotation process of the steering motor, the clutch is configured to drive the input shaft to rotate with the steering motor. In this application, power consumption of the rear wheel steering device is lower, and a service life of the steering motor is longer.

This application provides a vehicle. The vehicle includes one or more rear wheels and the rear wheel steering device provided above. The rear wheel steering device is configured to drive steering of the one or more rear wheels to change. The vehicle in this application has low power consumption on a basis of having a rear wheel steering function, and a service life of the rear wheel steering device is long.

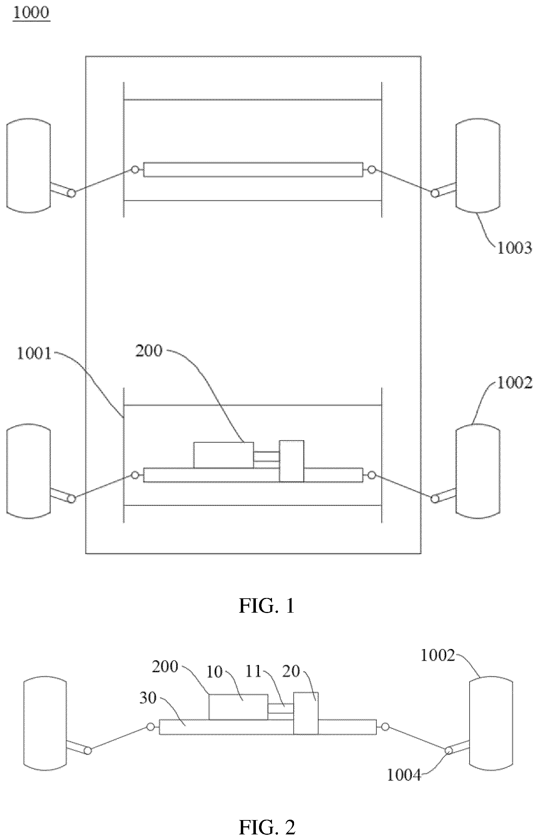

FIG. 1 is a diagram of an appearance structure of a vehicle 1000 according to an embodiment of this application.

As shown in FIG. 1, the vehicle 1000 provided in this application includes a rear wheel steering device 200, and the rear wheel steering device 200 is configured to be fastened to a vehicle frame 1001 and be in transmission connection to one or more rear wheels 1002 of the vehicle 1000. The rear wheel steering device 200 is configured to drive steering of the one or more rear wheels 1002 of the vehicle 1000 to change, to expand a control range of a steering angle of the vehicle 1000, and reduce occurrence of insufficient steering or excessive steering of the vehicle 1000.

For example, in some scenarios, when the vehicle 1000 needs to turn or make a U-turn with a small turning radius, a front wheel 1003 and the rear wheel 1002 of the vehicle 1000 may be controlled to rotate in opposite directions, to reduce the turning radius and improve flexibility of the vehicle 1000. In some other scenarios, when the vehicle 1000 needs to turn at a specific speed, a front wheel 1003 and the rear wheel 1002 of the vehicle 1000 may be controlled to rotate in a same direction, to reduce a mass center side-slip angle of the vehicle 1000, reduce a steady-state overshoot of a yaw rate of the vehicle 1000, and further enhance handling stability of the vehicle 1000.

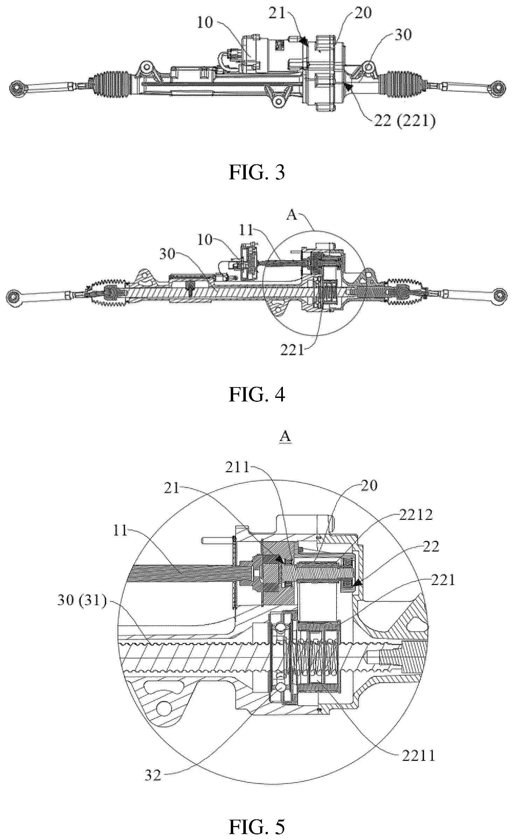

Refer to FIG. 2 and FIG. 3. FIG. 2 is a diagram of structures of the rear wheel steering device 200 and the rear wheel 1002 according to an embodiment of this application. FIG. 3 is a diagram of the structure of the rear wheel steering device 200 according to an embodiment of this application.

As shown in FIG. 2 and FIG. 3, the rear wheel steering device 200 provided in this application includes a steering motor 10, a transmission mechanism 20, and a tie rod 30. The steering motor 10 is configured to drive, by using the transmission mechanism 20, the tie rod 30 to move, to drive the one or more rear wheels 1002 to steer. The steering motor 10 is fastened to the vehicle frame 1001, and a motor shaft 11 of the steering motor 10 is parallel to an axial direction of the rear wheel 1002. The tie rod 30 is slidably connected to the vehicle frame 1001 in a direction parallel to the axial direction of the rear wheel 1002, and the tie rod 30 extends in the direction parallel to the axial direction of the rear wheel 1002. At least one axial end portion of the tie rod 30 is connected to one rear wheel 1002 through a steering knuckle 1004. The transmission mechanism 20 is configured to be in transmission connection to the steering motor 10 and the tie rod 30. The transmission mechanism 20 includes an input end 21 and an output end 22. The input end 21 is configured to receive a driving force of the steering motor 10, and the output end 22 is configured to drive the tie rod 30 to move in an axial direction of the tie rod 30, to drive the rear wheel 1002 to deflect relative to the vehicle frame 1001, thereby implementing steering of the rear wheel 1002.

In the embodiment shown in the figure, two ends of the tie rod 30 in the axial direction are separately in transmission connection to one rear wheel 1002 through one steering knuckle 1004. When the transmission mechanism 20 is configured to receive a driving force of the steering motor 10 to drive the tie rod 30 to move in the axial direction, the tie rod 30 is configured to drive two rear wheels 1002 to steer.

In an embodiment, the output end 22 includes a transmission member 221. The transmission member 221 is in transmission connection to the tie rod 30. The transmission member 221 receives a driving force of the input end 21, and transfers the driving force to the tie rod 30 to drive the tie rod 30 to move in the axial direction of the tie rod 30.

In an embodiment, the transmission member 221 includes a screw sleeve 2211. The screw sleeve 2211 is sleeved around an outer circumferential surface of the tie rod 30, and an inner circumferential surface of the screw sleeve 2211 is engaged with the outer circumferential surface of the tie rod 30. Specifically, refer to FIG. 4 and FIG. 5. FIG. 4 is a diagram of a cross-sectional structure of the rear wheel steering device 200 according to an embodiment of this application. FIG. 5 is a diagram of a cross-sectional structure of the transmission mechanism 20 in an area A in FIG. 4. As shown in FIG. 4 and FIG. 5, the tie rod 30 includes a threaded section 31. The screw sleeve 2211 is sleeved around the threaded section 31, and inner threads of the inner circumferential surface of the screw sleeve 2211 are correspondingly engaged with threads of the threaded section 31. The screw sleeve 2211 receives a driving force of the input end 21, to rotate around an axis of the tie rod 30 relative to the tie rod 30 and drive the tie rod 30 to move in the axial direction of the tie rod 30, so that the rear wheel 1002 implements steering. It may be understood that the screw sleeve 2211 is used to cooperate with the threaded section 31 of the tie rod 30, to ensure reliability of driving the tie rod 30 by the transmission member 221 to move in the axial direction of the tie rod 30.

In an embodiment, a plurality of balls 32 are disposed between the inner circumferential surface of the screw sleeve 2211 and the threaded section 31 of the tie rod 30. The plurality of balls 32 are spaced apart in a circumferential direction of the tie rod 30, and abut against and between the inner circumferential surface of the screw sleeve 2211 and an outer circumferential surface of the threaded section 31. It may be understood that the plurality of balls 32 can reduce friction between the screw sleeve 2211 and the tie rod 30, thereby improving transmission efficiency of the rear wheel steering device 200 in this application.

In an embodiment, the input end 21 includes an input shaft 211. An axis of the input shaft 211 is parallel to the axis of the tie rod 30, and the input shaft 211 and the tie rod 30 are spaced apart in a radial direction of the input shaft 211. In the axial direction of the input shaft 211, two opposite ends of the input shaft 211 are respectively in transmission connection to the steering motor 10 and the transmission member 221. Specifically, the transmission member 221 includes a transmission wheel 2212. The transmission wheel 2212 is sleeved around an end portion that is of the input shaft 211 and that is away from the steering motor 10 in the axial direction of the input shaft 211, and is fastened to the input shaft 211. In the radial direction of the input shaft 211, the transmission wheel 2212 is configured to be in transmission connection to the outer circumferential surface of the screw sleeve 2211. In this way, rotation of the motor shaft 11 of the steering motor 10 can drive the input shaft 211 to rotate, and the transmission wheel 2212 rotates with the input shaft 211 and drives the screw sleeve 2211 to rotate, so that the tie rod 30 can move in the axial direction of the tie rod 30.

It may be understood that, the axis of the input shaft 211 is set to be parallel to the axis of the tie rod 30, so that a size that is of the rear wheel steering device 200 provided in this application and that is in the radial direction of the input shaft 211 can be reduced, and a volume of the transmission member 221 can be compressed, thereby facilitating arrangement and assembly of the rear wheel steering device 200.

In an embodiment, a transmission manner between the transmission wheel 2212 and the screw sleeve 2211 may include any one or a combination of belt transmission, chain transmission, gear transmission, gear-rack transmission, and another manner, to ensure that a driving force of the transmission wheel 2212 can be reliably transmitted to the screw sleeve 2211, and the screw sleeve 2211 can rotate around the axis of the tie rod 30 to drive the tie rod 30 to move in the axial direction of the tie rod 30. This is not specifically limited in this application.

For ease of description, in subsequent embodiments of this application, the belt transmission is used as an example of the transmission manner between the transmission wheel 2212 and the screw sleeve 2211 for description.

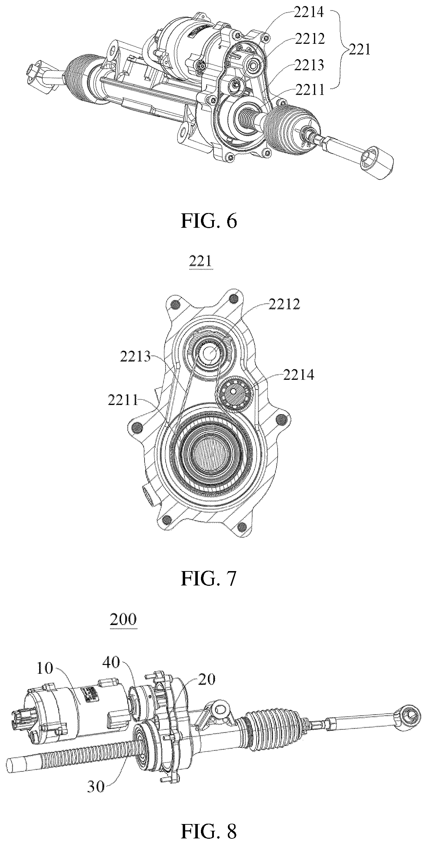

Refer to FIG. 6 and FIG. 7. FIG. 6 is a diagram of a structure of the transmission member 221 in the rear wheel steering device 200 according to an embodiment of this application. FIG. 7 is a diagram of a cross-sectional structure of the transmission member 221 in the rear wheel steering device 200 according to an embodiment of this application.

As shown in FIG. 6 and FIG. 7, the transmission member 221 includes a transmission belt 2213. An inner surface of the transmission belt 2213 is engaged with an outer circumferential surface of the transmission wheel 2212 and the outer circumferential surface of the screw sleeve 2211, to implement reliable transmission connection between the transmission wheel 2212 and the screw sleeve 2211. It may be understood that, the transmission belt 2213 in this application can ensure reliability of transmission connection between the transmission wheel 2212 and the screw sleeve 2211, and can also simplify the structure of the transmission member 221, so that movement of the transmission wheel 2212 and the screw sleeve 2211 is stable, noise is reduced, and manufacturing costs of the rear wheel steering device 200 can also be reduced.

In an embodiment, the transmission member 221 further includes a tightening wheel 2214. The tightening wheel 2214 is located between the transmission wheel 2212 and the screw sleeve 2211 in the radial direction of the input shaft 211. An outer circumferential surface of the tightening wheel 2214 is in contact with an outer surface of the transmission belt 2213, and squeezes the transmission belt 2213, to keep the transmission belt 2213 in a tense state, thereby increasing tension of attaching between the transmission belt 2213 and the transmission wheel 2212 and between the transmission belt 2213 and the screw sleeve 2211, preventing the transmission belt 2213 from slipping, reducing a risk of belt jumping of the transmission belt 2213, and ensuring transmission efficiency and stability of the transmission member 221.

In an embodiment, a diameter of the transmission wheel 2212 in the transmission member 221 is less than a diameter of the screw sleeve 2211. In this way, deceleration effect of the transmission member 221 may be formed in a direction from the input shaft 211 to the screw sleeve 2211. The transmission member 221 may be configured to adjust a rotation speed and torque of a driving force output by the steering motor 10, and transfer an adjusted driving force to the tie rod 30. Specifically, in a rotation process of the motor shaft 11 of the steering motor 10, the transmission member 221 may reduce a rotation speed of the screw sleeve 2211 and amplify a driving force output by the steering motor 10, to effectively ensure a transverse displacement amount generated by the tie rod 30 under driving of the screw sleeve 2211.

FIG. 8 is a diagram of a partial structure of the rear wheel steering device 200 according to an embodiment of this application.

As shown in FIG. 8, the rear wheel steering device 200 provided in this application further includes a clutch 40. The clutch 40 is configured to be in transmission connection to the motor shaft 11 of the steering motor 10 and the input shaft 211. Before the steering motor 10 rotates, the clutch 40 is configured to limit rotation of the input shaft 211. In a rotation process of the steering motor 10, the clutch 40 is configured to drive the input shaft 211 to rotate with the steering motor 10.

Specifically, the clutch 40 is located at the input shaft 211 and close to the steering motor 10, and is configured to lock or release the input shaft 211. That is, the clutch 40 is configured to receive driving of the steering motor 10 to lock the input shaft 211. In the rotation process of the motor shaft 11 of the steering motor 10, the steering motor 10 is configured to drive the clutch 40 to lock the input shaft 211 and drive the input shaft 211 to rotate synchronously. The clutch 40 and the input shaft 211 are configured to transfer a driving force of the steering motor 10 to the tie rod 30 to drive the tie rod 30 to move in the axial direction, to drive the two rear wheels 1002 to steer. Before the motor shaft 11 of the steering motor 10 rotates, the clutch 40 is configured to release the input shaft 211 and limit rotation of the input shaft 211, thereby limiting displacement of the tie rod 30 in the axial direction.

When the vehicle 1000 is traveling on an uneven road surface and unexpected steering of the two rear wheels 1002 is caused, the rear wheel steering device 200 provided in this application may limit an axial displacement amount of the tie rod 30 by using the clutch 40, to limit angles at which the two rear wheels 1002 make unexpected steering, and ensure that the vehicle 1000 travels stably. Specifically, when the rear wheel 1002 is impacted by the ground and makes unexpected steering, the rear wheel 1002 reversely drives the tie rod 30 to move in the axial direction of the tie rod 30, and therefore drives the transmission mechanism 20 to reversely drive the input shaft 211 to rotate. Before the steering motor 10 rotates, the clutch 40 is configured to release the input shaft 211. The clutch 40 limits rotation of the input shaft 211 when releasing the input shaft 211, so that the axial displacement amount of the tie rod 30 may be limited by the transmission mechanism 20, thereby limiting a steering angle at which the rear wheel 1002 makes unexpected steering. In this process, the steering motor 10 does not need to rotate, and the rear wheel steering device 200 provided in this application may limit the steering angle of the rear wheel 1002 by using the clutch 40.

In this way, the rear wheel steering device 200 provided in this application may reduce intervention of the steering motor 10 to limit frequency of unexpected steering made by the one or more rear wheels 1002. The steering motor 10 is prevented from operating in a stalling state for a long time, to limit a phenomenon of unexpected steering of the one or more rear wheels 1002. In this way, a service life of the steering motor 10 is prolonged, and power consumption of the rear wheel steering device 200 provided in this application is reduced.

Corresponding to the foregoing embodiment in which the transmission mechanism 20 includes the screw sleeve 2211, based on a feature that the screw sleeve 2211 is engaged with the tie rod 30, an axial displacement amount of the tie rod 30 generated through driving by rotation of the screw sleeve 2211 is relatively small. The rear wheel steering device 200 provided in this application limits a rotation angle of the input shaft 211 by using the clutch 40, and an axial displacement amount generated when the rotation angle is transferred to the tie rod 30 is relatively small, that is, angles at which the two rear wheels 1002 make unexpected steering under limitation of the clutch 40 are relatively small. The clutch 40 may ensure that the vehicle 1000 is in a relatively stable traveling state.

Corresponding to the embodiment in which deceleration effect of the transmission mechanism 20 is formed, the angles at which the two rear wheels 1002 make unexpected steering under limitation of the clutch 40 are further limited.

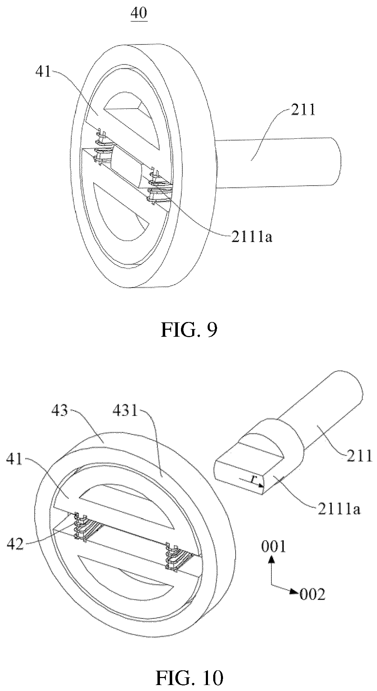

In an embodiment, the clutch 40 in this application includes a movable member 41. The clutch 40 is configured to lock or release the input shaft 211 through moving of the movable member 41 close to or away from an input shaft 211 in the radial direction of the input shaft 211. Specifically, refer to FIG. 9 and FIG. 10. FIG. 9 is a diagram of a structure for cooperation between the movable member 41 and the input shaft 211 according to an embodiment of this application. FIG. 10 is a diagram of exploded structures of the movable member 41 and the input shaft 211 according to an embodiment of this application.

As shown in FIG. 9 and FIG. 10, the input shaft 211 includes a radial protrusion. For ease of description, subsequently, the radial protrusion is defined as a first radial protrusion 2111a. The first radial protrusion 2111a overlaps the movable member 41 in the axial direction of the input shaft 211. Before the motor shaft 11 of the steering motor 10 rotates, the movable member 41 is configured to move away from the input shaft 211 to release the input shaft 211. Because the first radial protrusion 2111a overlaps the movable member 41 in the axial direction of the input shaft 211, when the first radial protrusion 2111a is driven by the tie rod 30 to rotate, the movable member 41 may also abut against the first radial protrusion 2111a in a circumferential direction of the input shaft 211 to limit rotation of the input shaft 211. In the rotation process of the motor shaft 11 of the steering motor 10, the movable member 41 is configured to move close to the input shaft 211 to lock the input shaft 211.

That is, the clutch 40 locks or releases the input shaft 211 through moving of the movable member 41 in a radial direction of the input shaft 211. It should be noted that the radial direction of the input shaft 211 is a first direction 001 in FIG. 10. When locking the input shaft 211, in the rotation process of the motor shaft 11 of the steering motor 10, the clutch 40 may drive the input shaft 211 to rotate, to transfer, to the tie rod 30 to drive the tie rod 30 to move in the axial direction, a driving force provided by the steering motor 10, thereby driving the two rear wheels 1002 to steer. However, when the clutch 40 releases the input shaft 211, before the motor shaft 11 of the steering motor 10 rotates, the movable member 41 may abut against the first radial protrusion 2111a of the input shaft 211 in the circumferential direction to limit rotation of the input shaft 211, to limit the axial displacement amount of the tie rod 30, thereby limiting the steering angle at which the rear wheel 1002 makes unexpected steering.

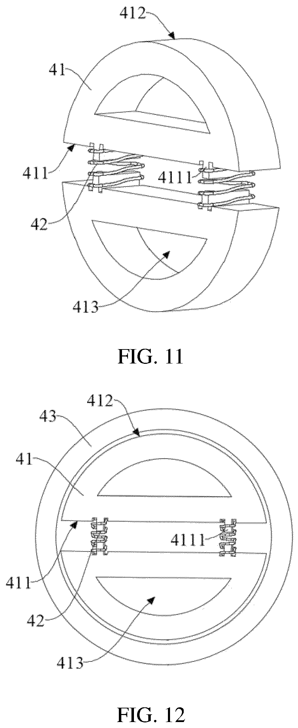

Refer to FIG. 11 and FIG. 12. FIG. 11 is a diagram of a structure of the movable member 41 according to an embodiment of this application. FIG. 12 is a diagram of structures of the movable member 41 and a housing 43 according to an embodiment of this application.

As shown in FIG. 11 and FIG. 12, in the radial direction of the input shaft 211, that is, in the first direction 001, the movable member 41 includes two end faces that face away from each other. For ease of description, subsequently, one of the two end faces that face away from each other is defined as a first end face 411, and the other end face is defined as a second end face 412. The first end face 411 is configured to face the input shaft 211 and abut against an elastic member 42, and the second end face 412 is configured to face an inner wall of the housing 43 of the clutch 40. In the rotation process of the motor shaft 11 of the steering motor 10, the first end face 411 moves toward the input shaft 211 in the radial direction of the input shaft 211 and abuts against the input shaft 211 to lock the input shaft 211. Before the motor shaft 11 of the steering motor 10 rotates, the movable member 41 is configured to receive, by using the first end face 411, driving of the elastic member 42 to move away from the input shaft 211 in the radial direction of the input shaft 211, to release the input shaft 211.

In an embodiment, a distance between the first end face 411 and the axis of the input shaft 211 is less than a radius of the first radial protrusion 2111a, where the radius of the first radial protrusion 2111a is shown as "r" in FIG. 10. That is, the radius of the first radial protrusion 2111a is a distance from the axis of the input shaft 211 to an outer profile of the first radial protrusion 2111a in the first direction 001. The movable member 41 is further configured to abut against the inner wall of the housing 43 of the clutch 40 by using the second end face 412 to limit rotation of the movable member 41 in the circumferential direction of the input shaft 211.

In this embodiment, the elastic member 42 is configured to: abut against the first end face 411 of the movable member 41 in a direction parallel to the radial direction of the input shaft 211, and drive the second end face 412 of the movable member 41 to abut against the inner wall of the housing 43 of the clutch 40. On a basis that the distance between the first end face 411 and the axis of the input shaft 211 is less than the radius of the first radial protrusion 2111a, before the steering motor 10 rotates, when the input shaft 211 rotates with axial displacement of the tie rod 30 due to ground impact on the rear wheel 1002, the first end face 411 of the movable member 41 abuts against the first radial protrusion 2111a of the input shaft 211 in the circumferential direction of the input shaft 211, to form friction to limit rotation of the input shaft 211, thereby limiting the axial displacement amount of the tie rod 30.

In an embodiment, the clutch 40 includes two elastic members 42. The two elastic members 42 are arranged on two sides of the input shaft 211 in another radial direction of the input shaft 211. It should be noted that the another radial direction of the input shaft 211 is a second direction 002 in FIG. 10, where the second direction 002 is perpendicular to the first direction 001. The two elastic members 42 are configured to jointly abut against the first end face 411 of the movable member 41 in the first direction 001, and drive the second end face 412 of the movable member 41 to abut against the inner wall of the housing 43 of the clutch 40. It may be understood that, the two elastic members 42 are used to cooperate with each other to drive, from the two sides of the input shaft 211, the second end face 412 to abut against the inner wall of the housing 43 of the clutch 40, so that it can be ensured that stress on the movable member 41 is more uniform, and the second end face 412 can reliably abut against the inner wall of the housing 43 of the clutch 40.

In an embodiment, the second end face 412 is circular-arc-shaped, and in the rotation process of the steering motor 10, a circle center of the second end face 412 coincides with the axis of the input shaft 211. A radius of rotation of the movable member 41 in the housing 43 of the clutch 40 is a circular-arc-shaped radius of the second end face 412. In this way, before the steering motor 10 rotates, an area of attaching between the second end face 412 and the inner wall of the housing 43 of the clutch 40 is relatively large, so that large friction can be formed to limit rotation of the input shaft 211. In the rotation process of the steering motor 10, the movable member 41 moves toward the input shaft 211 in the radial direction of the input shaft 211, and the second end face 412 is spaced apart from the inner wall of the housing 43, to avoid interference between the movable member 41 and the inner wall of the housing 43.

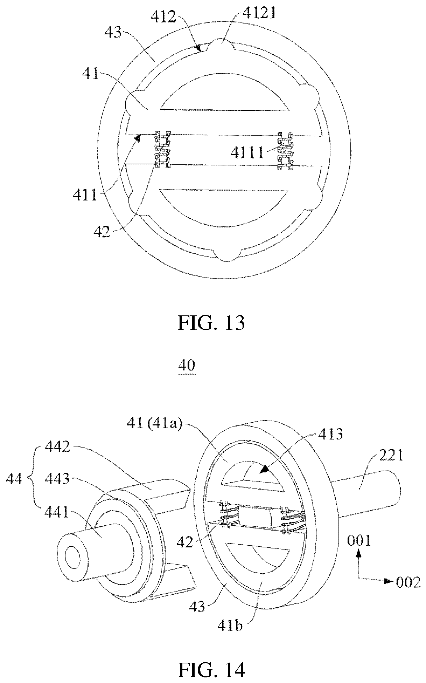

In an embodiment, the second end face 412 includes a radial protruding portion 4121. The radial protruding portion 4121 is configured to be embedded into the inner wall of the housing 43 of the clutch 40 to limit rotation of the movable member 41 in the circumferential direction of the input shaft 211. FIG. 13 is a diagram of structures of the movable member 41 and a housing 43 according to another embodiment of this application. As shown in FIG. 13, a second end face 412 of the movable member 41 is embedded into an inner wall of the housing 43 of the clutch 40 through a radial protruding portion 4121, so that resistance to rotation of the movable member 41 in the circumferential direction of the input shaft 211 relative to the inner wall of the housing 43 of the clutch 40 can be increased, to more reliably limit rotation of the input shaft 211 before the steering motor 10 rotates.

In an embodiment, there are a plurality of radial protruding portions 4121, and the plurality of radial protruding portions 4121 are spaced apart on the second end face 412 in the circumferential direction of the input shaft 211. Before the steering motor 10 rotates, the plurality of radial protruding portions 4121 are configured to be embedded into the inner wall of the housing 43 of the clutch 40 to further limit rotation of the movable member 41 in the circumferential direction of the input shaft 211. In the rotation process of the steering motor 10, the plurality of radial protruding portions 4121 are configured to move away from the inner wall of the housing 43 of the clutch 40 to be detached from the inner wall of the housing 43, to ensure that rotation of the steering motor 10 can smoothly drive the movable member 41 to rotate to drive the input shaft 211 to rotate.

For example, as shown in FIG. 13, there are three radial protruding portions 4121 on the second end face 412, and the three radial protruding portions 4121 are separately configured to be embedded into the inner wall of the housing 43 of the clutch 40, to further increase resistance to rotation of the movable member 41 in the circumferential direction of the input shaft 211 relative to the inner wall of the housing 43 of the clutch 40. It should be noted that a quantity of radial protruding portions 4121 is merely used as an example for description, that is, a quantity of radial protruding portions 4121 in another embodiment of this application includes but is not limited to three.

In an embodiment, in the radial direction of the input shaft 211, a length of the radial protruding portion 4121 is less than a difference between a distance, present before the steering motor 10 rotates, from the movable member 41 to the axis of the input shaft 211 and half of a thickness of the first radial protrusion 2111a in the circumferential direction of the input shaft 211. Distances, present before the steering motor 10 rotates and in the rotation process of the steering motor 10, of displacement of the movable member 41 in the radial direction of the input shaft 211 are the difference between the distance, present before the steering motor 10 rotates, from the movable member 41 to the axis of the input shaft 211 and half of the thickness of the first radial protrusion 2111a in the circumferential direction of the input shaft 211.

In this way, the length of the radial protruding portion 4121 in the radial direction of the input shaft 211 is set to be less than the difference, so that it can be ensured that the radial protruding portion 4121 is reliably detached from the inner wall of the housing 43 of the clutch 40 in the rotation process of the steering motor 10. That is, in this application, it can be ensured that before the motor shaft 11 of the steering motor 10 rotates, the radial protruding portion 4121 can be embedded into the inner wall of the housing 43 under driving of the elastic member 42 to further limit rotation of the movable member 41, and it can also be ensured that the radial protruding portion 4121 is easily detached from the inner wall of the housing 43 in the rotation process of the motor shaft 11 of the steering motor 10.

In an embodiment, in a cross section perpendicular to the axial direction of the input shaft 211, a cross section shape of the radial protruding portion 4121 is a circular-arc shape, so that the radial protruding portion 4121 is easily detached from the inner wall of the housing 43 of the clutch 40.

It should be noted that in the cross section perpendicular to the axial direction of the input shaft 211, the cross section shape of the radial protruding portion 4121 includes but is not limited to a circular-arc shape. For example, in another embodiment, in the cross section perpendicular to the axial direction of the input shaft 211, the cross section shape of the radial protruding portion 4121 may be a trapezoid, so that a self-locking angle of the radial protruding portion 4121 relative to the inner wall of the housing 43 of the clutch 40 is easily controlled through adjustment of an angle of an oblique edge of the trapezoid, thereby ensuring that the radial protruding portion 4121 is reliably embedded into the inner wall of the housing 43 of the clutch 40.

In an embodiment, the first end face 411 is a plane, and a plane direction of the first end face 411 is perpendicular to the radial direction of the input shaft 211. In this way, in the rotation process of the steering motor 10, the clutch 40 can reliably lock the input shaft 211 by using the first end face 411 of the movable member 41.

In an embodiment, the first end face 411 includes a limiting column. For ease of description, subsequently, the limiting column is defined as a first limiting column 4111. An extension direction of the first limiting column 4111 is parallel to the radial direction of the input shaft 211. In the another radial direction of the input shaft 211, that is, in the second direction 002 of the input shaft 211, a distance between the first limiting column 4111 and the axis of the input shaft 211 is greater than the radius of the first radial protrusion 2111a. The first limiting column 4111 is configured to extend into an inner hole of the elastic member 42 to drive the elastic member 42 to rotate with the movable member 41 in the rotation process of the steering motor 10.

Specifically, the first limiting column 4111 protrudes from the first end face 411 in the radial direction of the input shaft 211. In addition, the first limiting column 4111 and the first radial protrusion 2111a of the input shaft 211 are spaced apart in the second direction 002. For example, the elastic member 42 includes a spring. The elastic member 42 is sleeved around an outer surface of the first limiting column 4111 and abuts against the first end face 411. It may be understood that, the movable member 41 fixes a relative position of the elastic member 42 by using the first limiting column 4111, so that it can be ensured that the elastic member 42 pushes the movable member 41 in the radial direction of the input shaft 211. In addition, in the second direction 002, the first limiting column 4111 is further configured to be away from the axis of the input shaft 211 to avoid the first radial protrusion 2111a.

In an embodiment, the movable member 41 includes an axial groove 413. In the axial direction of the input shaft 211, a driving member 44 is configured to be partially embedded into a groove opening of the axial groove 413. In the rotation process of the steering motor 10, a part of the driving member 44 is configured to abut against a groove wall of the axial groove 413 in the radial direction of the input shaft 211 and simultaneously slide in the another radial direction of the input shaft 211 relative to the groove wall of the axial groove 413, to drive the movable member 41 to approach the input shaft 211.

In an embodiment, the axial groove 413 is configured to penetrate the movable member 41 in the axial direction of the input shaft 211, and a part of the driving member 44 is configured to pass through the axial groove 413 in the axial direction of the input shaft 211, to increase a contact area between a second section 442 and the groove wall of the axial groove 413. In this way, an embedding depth of the driving member 44 into the movable member 41 can be ensured, and reliability of driving the movable member 41 by the driving member 44 to move together can be ensured. In addition, the axial groove 413 can further reduce a weight of the movable member 41, and is also conducive to driving the movable member 41 by the driving member 44 to move.

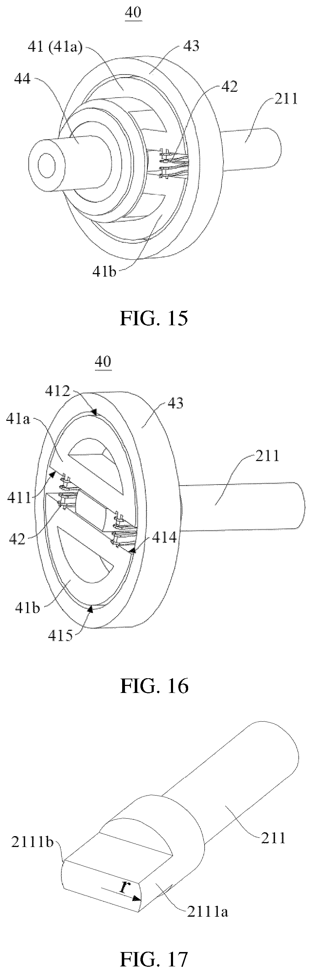

Refer to FIG. 14 and FIG. 15. FIG. 14 is a diagram of a structure of the driving member 44 according to an embodiment of this application. FIG. 15 is a diagram of a structure for cooperation between the movable member 41 and the driving member 44 according to an embodiment of this application.

As shown in FIG. 14 and FIG. 15, the clutch 40 includes a driving member 44. The driving member 44 is configured to be in transmission connection to the steering motor 10 and the movable member 41. In the rotation process of the steering motor 10, the driving member 44 is configured to: first drive the movable member 41 to approach the input shaft 211 in the radial direction of the input shaft 211, and then abut against the first radial protrusion 2111a by using the movable member 41 in the circumferential direction of the input shaft 211 to drive the input shaft 211 to rotate.

Specifically, the driving member 44 is located on a side that is of the movable member 41 and that is close to the steering motor 10, and two opposite ends of the driving member 44 are respectively in transmission connection to the movable member 41 and the motor shaft 11 of the steering motor 10. Before the steering motor 10 rotates, the movable member 41 is away from the input shaft 211 in the radial direction of the input shaft 211. In the rotation process of the steering motor 10, the clutch 40 first drives, under driving of the steering motor 10 by using the driving member 44, the movable member 41 to move close to the input shaft 211 in the radial direction of the input shaft 211, so that the first end face 411 of the movable member 41 abuts against a side wall of the first radial protrusion 2111a in the circumferential direction of the input shaft 211. Then, the driving member 44 drives the movable member 41 to rotate along the axis of the input shaft 211 and drives the input shaft 211 to rotate synchronously.

In an embodiment, the driving member 44 includes two sections in the axial direction of the input shaft 211. For ease of description, subsequently, one of the two sections is defined as a first section 441, and the other section is defined as a second section 442. The first section 441 is configured to be in transmission connection to the steering motor 10, and the second section 442 is configured to be embedded into the movable member 41.

Specifically, an axis of the first section 441 coincides with the axis of the input shaft 211, and an axis of the second section 442 is configured to be spaced apart from the axis of the first section 441 in the radial direction of the input shaft 211. In the rotation process of the steering motor 10, the first section 441 is configured to receive driving of the steering motor 10 to drive the second section 442 to rotate around the axis of the input shaft 211, and the second section 442 is configured to: first drive the movable member 41 to approach the input shaft 211, and then drive, by using the movable member 41, the input shaft 211 to rotate.

It may be understood that the driving member 44 receives a driving force of the steering motor 10 by using the first section 441, and drives the second section 442 to rotate around the axis of the input shaft 211. Because the second section 442 is spaced apart from the axis of the input shaft 211 in the radial direction of the input shaft 211, and rotation of the second section 442 generates a component in the radial direction of the input shaft 211, effect of first driving the movable member 41 to move in the radial direction of the input shaft 211 and then driving the movable member 41 and the input shaft 211 to rotate synchronously is achieved.

In an embodiment, the driving member 44 includes a radial connection section 443. The radial connection section 443 is configured to connect the first section 441 and the second section 442 of the driving member 44 in the radial direction of the input shaft 211.

In an embodiment, the movable member 41 includes an axial groove 413. In the axial direction of the input shaft 211, the second section 442 of the driving member 44 is configured to be embedded into a groove opening of the axial groove 413. In the another radial direction of the input shaft 211, a width of the second section 442 is less than a width of the axial groove 413. In the rotation process of the steering motor 10, the second section 442 is configured to abut against a groove wall of the axial groove 413 in the radial direction of the input shaft 211 and simultaneously slide in the another radial direction of the input shaft 211 relative to the groove wall of the axial groove 413, to drive the movable member 41 to approach the input shaft 211.

It may be understood that, when rotating around the axis of the input shaft 211, the second section 442 abuts against the groove wall of the axial groove 413 in the radial direction and slides in the another radial direction relative to the groove wall, to drive the movable member 41 to approach the input shaft 211 in the radial direction of the input shaft 211. The axial groove 413 is configured to provide space for the second section 442 to slide relative to the movable member 41.

In an embodiment, the axial groove 413 is configured to penetrate the movable member 41 in the axial direction of the input shaft 211. The second section 442 of the driving member 44 is configured to pass through the axial groove 413 in the axial direction of the input shaft 211, so that a contact area between the second section 442 and the groove wall of the axial groove 413 can be increased. In this way, an embedding depth of the second section 442 of the driving member 44 into the movable member 41 can be ensured, and reliability of driving the movable member 41 by the driving member 44 to move together can be ensured. In addition, the axial groove 413 can further reduce a weight of the movable member 41, and is also conducive to driving the movable member 41 by the driving member 44 to move.

In an embodiment, the clutch 40 includes another movable member. The movable member 41, the input shaft 211, and the another movable member are sequentially arranged in the radial direction of the input shaft 211. The clutch 40 is configured to lock or release the input shaft 211 through moving of the movable member 41 and the another movable member close to or away from each other in the radial direction of the input shaft 211. Before the steering motor 10 rotates, a distance between the another movable member and the axis of the input shaft 211 is less than the radius of the first radial protrusion 2111a.

For ease of description, subsequently, the movable member 41 is defined as a first movable member 41a, and the another movable member is defined as a second movable member 41b. Refer to a diagram of a structure for cooperation between the movable member 41 and the input shaft 211 according to another embodiment shown in FIG. 16. In the radial direction of the input shaft 211, the second movable member 41b also includes two end faces that face away from each other. For ease of description, subsequently, the two end faces that are of the second movable member 41b and that face away from each other are respectively defined as a third end face 414 and a fourth end face 415. The third end face 414 is a plane, and a plane direction of the third end face 414 is perpendicular to the radial direction of the input shaft 211. The fourth end face 415 is circular-arc-shaped, and a circle center of the fourth end face 415 coincides with the axis of the input shaft 211. The third end face 414 is configured to face the input shaft 211 and abut against the elastic member 42, and the fourth end face 415 is configured to face the inner wall of the housing 43 of the clutch 40.

The first movable member 41a and the second movable member 41b are respectively arranged on two sides of the input shaft 211 in the radial direction of the input shaft 211. In addition, the first movable member 41a and the second movable member 41b are connected through the elastic member 42. The first movable member 41a and the second movable member 41b cooperate with each other, and approach or are away from the input shaft 211 from the two sides in the radial direction of the input shaft 211, to lock or release the input shaft 211.

Specifically, in the rotation process of the steering motor 10, under driving of the driving member 44, the first movable member 41a and the second movable member 41b move respectively from the two sides of the input shaft 211 to the input shaft 211 in the radial direction of the input shaft 211. That is, the first movable member 41a and the second movable member 41b move toward each other, and jointly clamp two side walls of the input shaft 211, to reliably lock the input shaft 211. Before the steering motor 10 rotates, under driving of the elastic member 42, the first movable member 41a and the second movable member 41b move respectively from the two sides of the input shaft 211 in the radial direction of the input shaft 211 toward directions away from the input shaft 211. That is, the first movable member 41a and the second movable member 41 move away from each other, to release the input shaft 211. On a basis that a distance between the first movable member 41a and the axis of the input shaft 211 and the distance between the second movable member 41b and the axis of the input shaft 211 are separately less than the radius of the first radial protrusion 2111a, that is, on a basis that a distance between the first movable member 41a and the second movable member 41b is less than a diameter of the first radial protrusion 2111a, the first movable member 41a and the second movable member 41b can be used to limit rotation of the first radial protrusion 2111a. This may reduce a rotation angle that is of the input shaft 211 and that is limited by the clutch 40, that is, reduce an angle at which the rear wheel 1002 makes unexpected steering.

It may be understood that, the first movable member 41a and the second movable member 41 are used to cooperate with each other to limit rotation of the input shaft 211. This may increase a contact area with the first radial protrusion 2111a of the input shaft 211 and increase friction, to improve reliability of limiting rotation of the input shaft 211.

In an embodiment, the fourth end face 415 also includes a radial protruding portion 4121. The radial protruding portion 4121 is configured to be embedded into the inner wall of the housing 43 of the clutch 40 to limit rotation of the second movable member 41b in the circumferential direction of the input shaft 211.

In an embodiment, in the cross section perpendicular to the axial direction of the input shaft 211, a cross section shape of the radial protruding portion 4121 is a circular-arc shape or trapezoid.

In an embodiment, the third end face 414 includes another limiting column. For ease of description, subsequently, the another limiting column on the third end face 414 is defined as a second limiting column 4141. An extension direction of the second limiting column 4141 is parallel to the radial direction of the input shaft 211. The first limiting column 4111 and the second limiting column 4141 extend toward each other. In the another radial direction of the input shaft 211, a distance between the second limiting column 4141 and the axis of the input shaft 211 is greater than the radius of the first radial protrusion 2111a. That is, in the another radial direction of the input shaft 211, a distance between the first limiting column 4111 and the second limiting column 4141 is greater than a distance between the first radial protrusion 2111a and a second radial protrusion 2111b. The second limiting column 4141 is configured to extend into the inner hole of the elastic member 42 to drive the elastic member 42 to rotate with the first movable member 41a and the second movable member 41b in the rotation process of the steering motor 10.

In an embodiment, in the radial direction of the input shaft 211, a sum of a length of the first limiting column 4111 and a length of the second limiting column 4141 is less than or equal to a thickness of the first radial protrusion 2111a, to ensure that in the rotation process of the steering motor 10, the first movable member 41a and the second movable member 41b can abut against the first radial protrusion 2111a respectively from two sides and drive the input shaft 211 to rotate.

In an embodiment, before the steering motor 10 rotates, a spacing between the first limiting column 4111 and the second limiting column 4141 is greater than a sum of sliding distances of the first movable member 41a and the second movable member 41b in the first direction 001. That is, in the rotation process of the steering motor 10, when the first limiting column 4111 and the second limiting column 4141 move toward each other in the first direction 001 respectively with the first movable member 41a and the second movable member 41b, interference does not occur due to an excessively small relative distance, and it is ensured that the first movable member 41a and the second movable member 41b separately reliably abut against the first radial protrusion 2111a.

In an embodiment, in the direction parallel to the radial direction of the input shaft 211, an axis of the first limiting column 4111 coincides with an axis of the second limiting column 4141.

In an embodiment, the driving member 44 includes two other sections, that is, the driving member 44 includes two second sections 442. For details, refer to FIG. 14. As shown in FIG. 14, the two second sections 442 are spaced apart respectively on two sides of the first section 441 in the radial direction of the input shaft 211. One of the second sections 442 is configured to drive the first movable member 41a, and the other second section 442 is configured to drive the second movable member 41b. In an embodiment, the second movable member 41b is also provided with an axial groove 413, that is, the first movable member 41a and the second movable member 41b are separately provided with one axial groove 413. In the axial direction of the input shaft 211, the two second sections 442 of the driving member 44 are separately configured to be embedded into a groove opening of one axial groove 413, so that the two second sections 442 of the driving member 44 can rotate to abut against inner walls of axial grooves 413 to respectively drive the first movable member 41a and the second movable member 41b to move toward each other, thereby reliably locking the input shaft 211.

In an embodiment, the axial groove 413 is configured to penetrate the first movable member 41a or the second movable member 41b in the axial direction of the input shaft 211. Correspondingly, the two second sections 442 of the driving member 44 are separately configured to pass through one axial groove 413 in the axial direction of the input shaft 211. The second section 442 is used to penetrate the axial groove 413, so that reliability of cooperation between the second section 442 and the axial groove 413 can be ensured, and the second section 442 is prevented from being detached from the axial groove 413 when the second section 442 rotates.

In an embodiment, the radial connection section 443 is configured to extend away from each other in the first direction 001 and be connected to the two second sections 442. That is, the radial connection section 443 is configured to connect the first section 441 and the second section 442 of the driving member 44 in the axial direction of the input shaft 211, and is further configured to be connected to the two second sections 442 of the driving member 44 in the radial direction of the input shaft 211.

Refer to a diagram of a structure of the input shaft 211 according to an embodiment of this application shown in FIG. 17.

As shown in FIG. 17, in an embodiment, the input shaft 211 includes another radial protrusion. For ease of description, subsequently, the another radial protrusion is defined as a second radial protrusion 2111b. In the radial direction of the input shaft 211, the second radial protrusion 2111b and the first radial protrusion 2111a extend away from each other in a same straight line direction. Before the steering motor 10 rotates, in the radial direction of the input shaft 211, a sum of radiuses of the first radial protrusion 2111a and the second radial protrusion 2111b is greater than the distance between the first movable member 41a and the second movable member 41b.

It may be understood that, based on the radial direction of the input shaft 211, the sum of the radiuses of the first radial protrusion 2111a and the second radial protrusion 2111b is greater than the distance between the first movable member 41a and the second movable member 41b. In the rotation process of the steering motor 10, the first movable member 41a may abut against a side wall of the first radial protrusion 2111a or a side wall of the second radial protrusion 2111b in the circumferential direction of the input shaft 211, and the second movable member 41b may also abut against the side wall of the first radial protrusion 2111a or the side wall of the second radial protrusion 2111b in the circumferential direction of the input shaft 211, to drive the input shaft 211 to rotate. Before the steering motor 10 rotates, the first movable member 41a may limit, in the circumferential direction of the input shaft 211, rotation of the first radial protrusion 2111a or the second radial protrusion 2111b, and the second movable member 41b may limit, in the circumferential direction of the input shaft 211, rotation of the first radial protrusion 2111a or the second radial protrusion 2111b, thereby reducing a rotation angle that is of the input shaft 211 and that is limited by the clutch 40, that is, reducing an angle at which the one or more rear wheels 1002 make unexpected steering.

In an embodiment, the clutch 40 includes two elastic members 42. For details, refer to FIG. 14. As shown in FIG. 14, in the radial direction of the input shaft 211, that is, in the first direction 001, the two elastic members 42 are arranged between the first movable member 41a and the second movable member 41b. In the another radial direction of the input shaft 211, that is, in the second direction 002, the two elastic members 42 are arranged on two sides of the input shaft 211. Each elastic member 42 is configured to abut against the first movable member 41a and the second movable member 41b in the first direction 001. Before the steering motor 10 rotates, the first movable member 41a and the second movable member 41b are configured to receive driving of the two elastic members 42 to respectively abut against two sides of the inner wall of the housing 43 of the clutch 40.

It may be understood that the two elastic members 42 are spaced apart in the second direction 002 of the input shaft 211, so that stress on the first movable member 41a and the second movable member 41b can be more uniform, and the first movable member 41a and the second movable member 41b reliably abut against the inner wall of the housing 43 of the clutch 40 in the radial direction of the input shaft 211.

In an embodiment, the inner wall of the housing 43 of the clutch 40 includes a limiting ring 431. Specifically, refer to FIG. 10. As shown in FIG. 10, an axis of the limiting ring 431 coincides with the axis of the input shaft 211. In the radial direction of the input shaft 211, the limiting ring 431 is configured to surround the movable member 41. In the axial direction of the input shaft 211, two side walls that are of the movable member 41 and that face away from each other are located between two side walls that are of the limiting ring 431 and that face away from each other. Before the steering motor 10 rotates, an inner circumferential surface of the limiting ring 431 is configured to abut against the movable member 41 in the radial direction of the input shaft 211 to limit rotation of the input shaft 211.

It may be understood that the inner wall of the housing 43 of the clutch 40 abuts against the movable member 41 by using the limiting ring 431. The inner circumferential surface of the limiting ring 431 is configured to be attached to the second end face 412 of the movable member 41, to increase friction between the movable member 41 and the inner wall of the housing 43 of the clutch 40.

It should be noted that, the limiting ring 431 in the foregoing embodiment may be a separate part assembled in the housing 43 of the clutch 40, or may be an integrated structure with the housing 43 of the clutch 40. When the limiting ring 431 and the housing 43 of the clutch 40 are of an integrated structure, that is, the inner wall of the housing 43 may be used to form a structure of the limiting ring 431, to cooperate with the clutch 40 to implement a limiting function on the input shaft 211.

It is clear that a person skilled in the art can make various modifications and variations to this application without departing from the protection scope of this application. This application is intended to cover these modifications and variations of this application provided that they fall within the scope of protection defined by the claims of this application and their equivalent technologies.

## Claims

1. A clutch-limited rear wheel steering device, wherein the rear wheel steering device is configured to control steering of one or more rear wheels of a vehicle, the rear wheel steering device comprises a clutch, an input shaft, and a tie rod, the input shaft is configured to drive the tie rod to move in an axial direction of the tie rod, steering of the one or more rear wheels changes with axial displacement of the tie rod, and the clutch is configured to be in transmission connection to a steering motor and the input shaft;
before the steering motor rotates, the clutch is configured to limit rotation of the input shaft; and
in a rotation process of the steering motor, the clutch is configured to drive the input shaft to rotate with the steering motor.

2. The rear wheel steering device according to claim 1, wherein the clutch comprises a movable member, and the clutch is configured to lock or release the input shaft through moving of the movable member close to or away from the input shaft in a radial direction of the input shaft;
the input shaft comprises a radial protrusion, and the radial protrusion overlaps the movable member in an axial direction of the input shaft; and
before the steering motor rotates, the movable member is configured to move away from the input shaft to release the input shaft, and the movable member is further configured to abut against the radial protrusion in a circumferential direction of the input shaft to limit rotation of the input shaft.

3. The rear wheel steering device according to claim 2, wherein in the radial direction of the input shaft, the movable member comprises two end faces that face away from each other, one of the end faces is configured to face the input shaft and abut against an elastic member, and the other end face is configured to face an inner wall of a housing of the clutch; and before the steering motor rotates:
the movable member is configured to receive, by using the end face, driving of the elastic member to move away from the input shaft; and
a distance between the end face and an axis of the input shaft is less than a radius of the radial protrusion, and the movable member is configured to abut against the inner wall of the housing of the clutch by using the other end face to limit rotation of the movable member in the circumferential direction of the input shaft.

4. The rear wheel steering device according to claim 3, wherein the other end face is circular-arc-shaped; when the movable member releases the input shaft, a circle center of the other end face coincides with the axis of the input shaft; and
the other end face comprises a radial protruding portion, and the radial protruding portion is configured to be embedded into the inner wall of the housing of the clutch to limit rotation of the movable member in the circumferential direction of the input shaft.

5. The rear wheel steering device according to claim 3, wherein the end face comprises a limiting column, and an extension direction of the limiting column is parallel to the radial direction of the input shaft;
in another radial direction of the input shaft, a distance between the limiting column and the axis of the input shaft is greater than the radius of the radial protrusion, and the another radial direction of the input shaft is perpendicular to the radial direction of the input shaft; and
the limiting column is configured to extend into an inner hole of the elastic member to drive the elastic member to rotate with the movable member in the rotation process of the steering motor.

6. The rear wheel steering device according to any one of claims 2 to 5, wherein the clutch comprises a driving member, and the driving member is configured to be in transmission connection to the steering motor and the movable member; and
in the rotation process of the steering motor, the driving member is configured to: first drive the movable member to approach the input shaft in the radial direction of the input shaft, and then abut against the radial protrusion by using the movable member in the circumferential direction of the input shaft to drive the input shaft to rotate.

7. The rear wheel steering device according to claim 6, wherein the driving member comprises two sections in the axial direction of the input shaft, one of the sections is configured to be in transmission connection to the steering motor, and the other section is configured to be embedded into the movable member;
an axis of the section coincides with the axis of the input shaft, and an axis of the other section is configured to be spaced apart from the axis of the section in the radial direction of the input shaft; and
in the rotation process of the steering motor, the section is configured to receive driving of the steering motor to drive the other section to rotate around the axis of the input shaft, and the other section is configured to: first drive the movable member to approach the input shaft, and then drive, by using the movable member, the input shaft to rotate.

8. The rear wheel steering device according to claim 7, wherein the movable member comprises an axial groove, and in the axial direction of the input shaft, the other section of the driving member is configured to be embedded into a groove opening of the axial groove;
in the another radial direction of the input shaft, a width of the other section is less than a width of the axial groove; and
in the rotation process of the steering motor, the other section is configured to abut against a groove wall of the axial groove in the radial direction of the input shaft and simultaneously slide in the another radial direction of the input shaft relative to the groove wall of the axial groove, to drive the movable member to approach the input shaft.

9. The rear wheel steering device according to any one of claims 2 to 8, wherein the clutch comprises another movable member, the movable member, the input shaft, and the another movable member are sequentially arranged in the radial direction of the input shaft, and the clutch is configured to lock or release the input shaft through moving of the movable member and the another movable member close to or away from each other in the radial direction of the input shaft; and
before the steering motor rotates, a distance between the another movable member and the axis of the input shaft is less than the radius of the radial protrusion.

10. The rear wheel steering device according to claim 9, wherein the input shaft comprises another radial protrusion, and in the radial direction of the input shaft, the another radial protrusion and the radial protrusion extend away from each other in a same straight line direction; and
before the steering motor rotates, in the radial direction of the input shaft, a sum of radiuses of the radial protrusion and the another radial protrusion is greater than a distance between the movable member and the another movable member.

11. The rear wheel steering device according to claim 9 or 10, wherein the clutch comprises two elastic members, the two elastic members are arranged between the movable member and the another movable member in the radial direction of the input shaft, and the two elastic members are arranged on two sides of the input shaft in the another radial direction of the input shaft;
each elastic member is configured to abut against the movable member and the another movable member in the radial direction of the input shaft; and
before the steering motor rotates, the movable member and the another movable member are configured to receive driving of the two elastic members to respectively abut against two sides of the inner wall of the housing of the clutch.

12. The rear wheel steering device according to any one of claims 2 to 11, wherein the inner wall of the housing of the clutch comprises a limiting ring, and an axis of the limiting ring coincides with the axis of the input shaft;
in the radial direction of the input shaft, the limiting ring is configured to surround the movable member;
in the axial direction of the input shaft, two side walls that are of the movable member and that face away from each other are located between two side walls that are of the limiting ring and that face away from each other; and
before the steering motor rotates, an inner circumferential surface of the limiting ring is configured to abut against the movable member in the radial direction of the input shaft to limit rotation of the input shaft.

13. The rear wheel steering device according to any one of claims 1 to 12, wherein the axis of the input shaft is parallel to an axis of the tie rod, the input shaft is spaced apart from the tie rod in the radial direction of the input shaft, and an end portion that is of the input shaft and that is away from the steering motor in the axial direction of the input shaft is configured to be in transmission connection to a middle section of the tie rod through a transmission member;
in the rotation process of the steering motor, the input shaft is configured to drive, by using the transmission member, the tie rod to move in the axial direction of the tie rod; and
before the steering motor rotates, the clutch is configured to limit fluttering of the tie rod in the axial direction of the tie rod by limiting rotation of the transmission member driven by the input shaft.

14. The rear wheel steering device according to claim 13, wherein the transmission member comprises a transmission wheel and a screw sleeve, the transmission wheel is configured to be fastened to the end portion that is of the input shaft and that is away from the steering motor in the axial direction, and an inner circumferential surface of the screw sleeve is configured to be engaged with an outer circumferential surface of the middle section of the tie rod; and
in the radial direction of the input shaft, the transmission wheel is configured to be in transmission connection to an outer circumferential surface of the screw sleeve, and a diameter of the transmission wheel is less than a diameter of the screw sleeve.

15. A vehicle, wherein the vehicle comprises:
one or more rear wheels; and
the rear wheel steering device according to any one of claims 1 to 14, wherein the rear wheel steering device is configured to drive steering of the one or more rear wheels to change.
